## Europäisches Patentamt
## European Patent Office
## Office européen des brevets

(19)

(11) Veröffentlichungsnummer: **0 031 607**
**B1**

(12) # EUROPÄISCHE PATENTSCHRIFT

(45) Veröffentlichungstag der Patentschrift:
**25.04.84**

(51) Int. Cl.³: **B 65 B 39/00, A 22 C 11/02**

(21) Anmeldenummer: **80201139.5**

(22) Anmeldetag: **02.12.80**

(54) **Füllrohr zum Füllen von schlauchförmigen Verpackungshüllen mit pastösem Füllgut.**

(30) Priorität: **15.12.79 DE 2950590**

(43) Veröffentlichungstag der Anmeldung:
**08.07.81 Patentblatt 81/27**

(45) Bekanntmachung des Hinweises auf die Patenterteilung:
**25.04.84 Patentblatt 84/17**

(84) Benannte Vertragsstaaten:
**AT BE CH DE FR GB IT LI NL SE**

(56) Entgegenhaltungen:
**DE - A - 2 114 903**
**DE - A - 2 437 562**
**DE - A - 2 649 249**
**DE - A - 2 702 749**
**DE - A - 2 828 337**
**DE - B - 1 057 908**
**DE - B - 2 402 361**

(73) Patentinhaber: **Niedecker, Herbert, Dipl.-Ing., Am Ellerhang 6, D-6240 Königstein 2 (DE)**

(72) Erfinder: **Niedecker, Herbert, Dipl.-Ing., Am Ellerhang 6, D-6240 Königstein 2 (DE)**

(74) Vertreter: **Fischer, Ernst, Dr., Reuterweg 14, D-6000 Frankfurt am Main 1 (DE)**

Füllrohr zum Füllen von schlauchförmigen Verpackungshüllen mit pastösem Füllgut

Die Erfindung betrifft ein Füllrohr zum Füllen von schlauchförmigen Verpackungshüllen mit pastösem Füllgut mit einem vor der Austrittsöffnung des Füllrohres angebrachten deckel- oder stopfenartigen Abschlußelement, das mit dem Füllrohr so verbunden ist, daß sich zwischen dem Austrittsende des Füllrohres und dem Abschlußelement radiale Austrittsöffnungen ergeben, durch die das Füllgut radial in die Verpackungshülle gelenkt wird.

Aus DE-B-1 057 908 ist ein Füllrohr der vorgenannten Art bekannt. bei dem das Abschlußelement auch ventilkegelförmig ausgebildet sein kann. Dadurch ist es aber nicht möglich, Füllgut zu verwenden, in dem Fleischstücke von einer gewissen Größe eingelagert sind, da diese beim Füllvorgang die Austrittsöffnung verstopfen würden.

Es sind auch Vorrichtungen zum Füllen von schlauchförmigen Verpackungshüllen mit pastösem Füllgut bekannt, wobei die Austrittsöffnung des Füllrohres von einem Abschlußelement verschlossen wird, das mit einer Verbindungsstange durch das Füllrohr betätigt wird (DE-A-2 402 361). Dies hat den Nachteil, daß der Querschnitt des Füllrohres entsprechend verringert wird, und die Reibungsflächen des Füllgutes entsprechend erhöht sind.

In DE-A-2 437 562 und DE-A-2 114 903 besitzt darüber hinaus das Abschlußelement eine Schneidkante für stückiges Füllgut. Dabei wird das Füllgut zunächst gequetscht und erst in der Endstellung durchschritten. Dadurch werden einseitige Kräfte auf die Verbindungsstange ausgeübt, so daß ihre zentrische Führung nicht mehr gewährleistet ist.

Es ist auch ein Füllrohr bekannt (DE-A-2 649 249; 2 828 337), das an seiner Stirnseite teilweise geschlossen ist, wodurch die Austrittsöffnung kleiner ist als der halbe Füllrohrquerschnitt. Der Verschluß erfolgt durch Drehung eines auf dem Füllrohr angebrachten Mantelrohres.

Der Erfindung liegt die Aufgabe zugrunde, bei einem Füllrohr der eingangs beschriebenen Art einen Verschlußmechanismus vorzusehen, der die Ausnützung des vollen Füllrohrquerschnitts für den schonenden Austritt des Füllgutes, auch wenn dieses Fleischstücke enthält, ermöglicht. Außerdem soll das Verschlußelement für den Füllrohraustritt von außen betätigt werden, damit auch revolverartig angeordnete Füllrohre eingesetzt werden können. Außerdem sollen Fleischstücke, die in das Füllgut eingelagert sind und sich beim Füllvorgang in der Austrittsöffnung befinden, einwandfrei durchschnitten werden, damit der Zipfel der verschlossenen Verpackungshülle frei von Füllgut ist.

Diese Aufgabe wird erfindungsgemäß dadurch gelöst, daß auf dem Füllrohr ein Mantelrohr axial verschiebbar angebracht ist, das in seiner ersten Endstellung die Austrittsöffnungen des Füllrohres freigibt und in seiner zweiten Endstellung mantelförmig verschließt, und daß die Stirnkante des Mantelrohres als Schneide ausgebildet ist. Das Mantelrohr kann auch in einer kombinierten Axial-Drehbewegung in seine zweite Endstellung gebracht werden, wodurch die Schneidwirkung noch verbessert werden kann. Das Abschlußelement ist vorzugsweise, wie aus DE-B-1 057 908 bekannt, ventilkegelförmig ausgebildet, was strömungsförmig günstig ist.

Das erfindungsgemäße Füllrohr hat den Vorteil, daß durch die Anordnung der Austrittsöffnung das Füllgut radial austritt und dadurch der gesamte Querschnitt des Füllrohres zum Austritt des Füllgutes zur Verfügung steht. Außerdem können durch das mit einer Schneidkante versehene Mantelrohr Fleischstücke oder Sehnen, die sich nach dem Füllen der Verpackungshülle in der Austrittsöffnung befinden, einwandfrei durchschnitten werden. Dadurch wird vermieden, daß im Zipfel der verschlossenen Verpackungshülle verderbliche Fleischreste zurückbleiben. Durch die vorgesehene Ausbildung der Austrittsöffnung wird eine strömungsförmige und reibungsarme Füllung der Verpackungshülle ermöglicht und ein besseres Brätbild, insbesondere bei Rohwurst, erreicht. Außerdem wird durch den mit dem Mantelrohr verbundenen äußeren Antrieb ermöglicht, das erfindungsgemäße Füllrohr bei revolverartigen Anordnungen von Mehrfachtüllen zu verwenden.

Die Vorrichtung gemäß der Erfindung wird nachstehend in Verbindung mit den Abbildungen beschrieben, die Ausführungsformen der Erfindung zeigt.

Fig. 1 zeigt einen Schnitt durch die Vorrichtung in der ersten Endstellung des Mantelrohres;

Fig. 2 zeigt einen Schnitt durch die Vorrichtung in der zweiten Endstellung des Mantelrohres;

Fig. 3 zeigt einen Schnitt gemäß Fig. 2 während des Verschließvorganges;

Fig. 4a/4b zeigen zwei Schnitte des Füllrohrendes mit Abschlußelement der Vorrichtung gemäß Fig. 1 – 3;

Fig. 5a/5b zeigen eine Ansicht und einen Schnitt einer anderen Ausführungsform des Abschlußelementes der Vorrichtung gemäß Fig. 1 – 3.

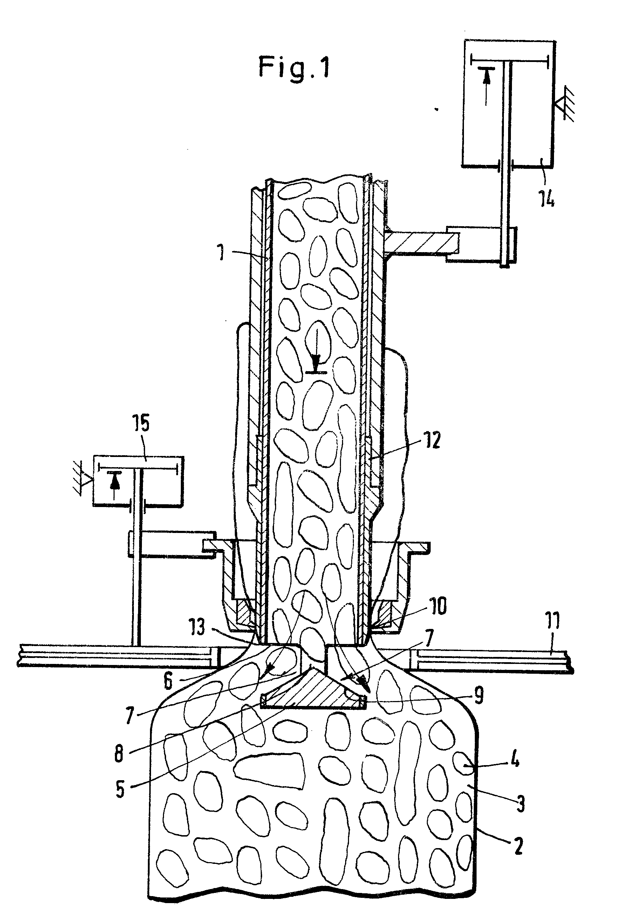

Die Fig. 1 zeigt den Endabschnitt des Füllrohres 1 einer nicht gezeigten Füllmaschine während des Füllvorganges einer schlauchförmigen Verpackungshülle mit pastösem Füllgut 3, in dem hier große Fleischstücke 4 eingelagert sind. Am Austrittsende 6 des Füllrohres 1 ist ein kegelförmiges Abschlußelement 5 so angebracht, daß zwischen Austrittsende 6 und Abschlußelement 5 Austrittsöffnungen für Füllgut 3 entstehen. Das Abschlußelement 5 ist über Stege 8 mit dem Füllrohr 1 verbunden. Der Kegel 9 des Abschlußelements 5 ist so ausgebildet, daß das aus dem Füllrohr 1 strömende pastöse Füllgut 3 in eine radiale Richtung umgelenkt wird.

Die schlauchförmige Verpackungshülle 2 wird von einer Darmbremse 10 während des Füllvorgangs abgebremst. Das Verdrängergerät 11 ist während des Füllvorgangs soweit zurückgefahren, daß das Füllgut ungehindert austreten kann.

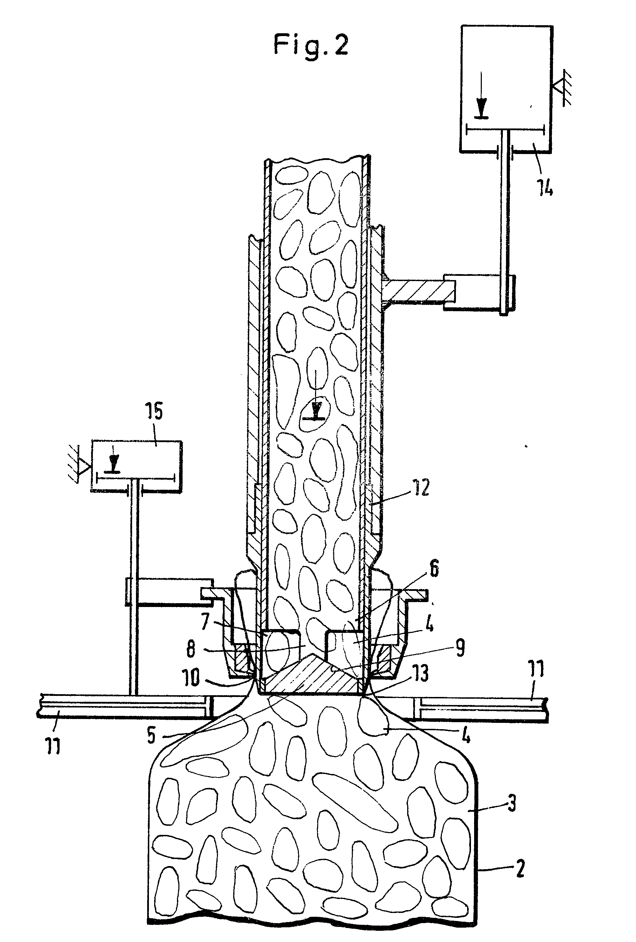

Auf dem Füllrohr 1 ist das Mantelrohr 12 axial verschiebbar angebracht. Die axiale Bewegung kann aber auch mit einer Drehbewegung kombiniert sein. Die Stirnkante des Mantelrohres 12 ist als Schneide 13 ausgebildet. Nach beendetem Füllvorgang wird das Mantelrohr 12 durch einen Antrieb 14 in Füllrichtung axial verschoben und schließt die Austrittsöffnung 7 (Fig. 2). Stückiges Füllgut 4 wird durch die Schneidkante 13 in Verbindung mit dem Abschlußelement 5 abgetrennt. Dabei werden auch die Darmbremse 10 und die Verdrängerscheren 11 durch einen weiteren Antrieb 15 in Füllrichtung verschoben.

Die Fig. 2 zeigt die zweite Endstellung des Mantelrohres 12, das die Austrittsöffnung 7 verschlossen hat. Dabei wurde das Fleischstück 4 durch die Schneidkante 13 des Mantelrohres 12 getrennt.

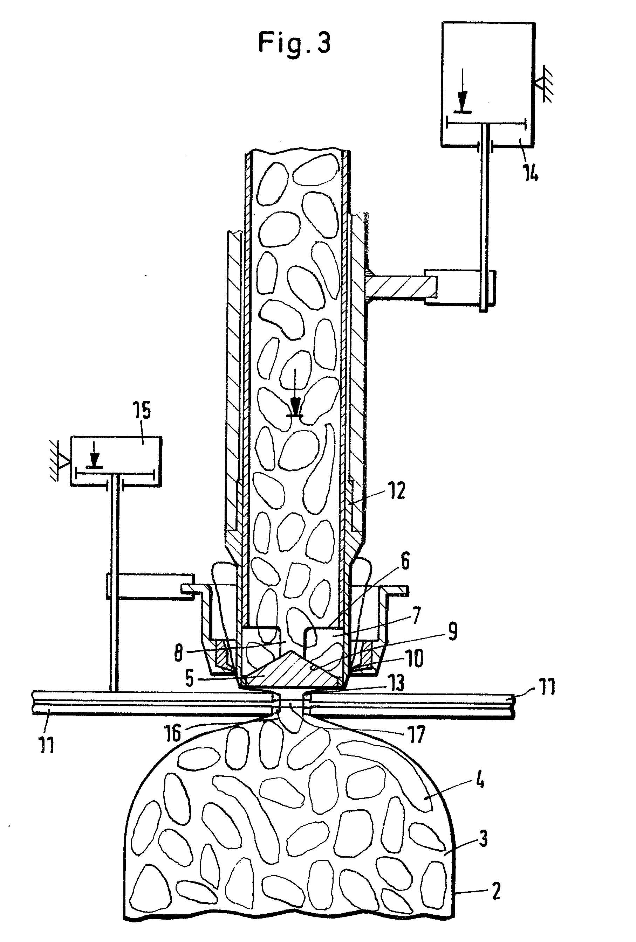

Die Fig. 3 zeigt die zweite Endstellung des Mantelrohres 12 gemäß Fig. 2, wobei die Verdrängerscheren 11 geschlossen sind, die die Verpackungshülle 2 zum Zopf 16 raffen, der anschließend mit einer Klammer 17 verschlossen wird. Der Antrieb 14 bringt dann das Mantelrohr 12 in die erste Endstellung zurück.

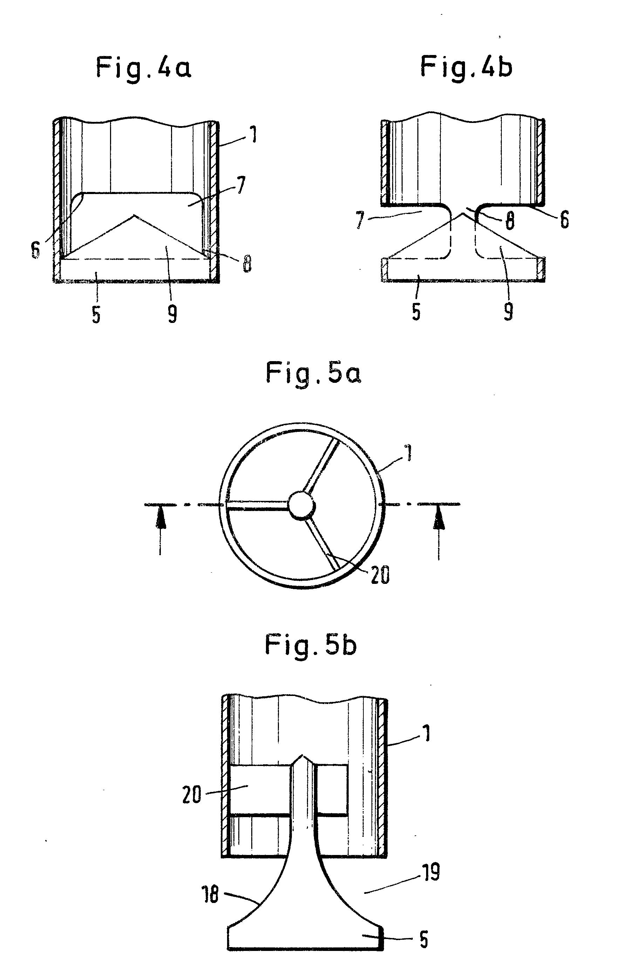

Die Fig. 4a und 4b zeigen im Schnitt das Austrittsende 6 mit Abschlußelement 5 und Austrittsöffnung 7 gemäß den Fig. 1 — 3. Fig. 5a und 5b zeigen eine andere Ausführungsform des Abschlußelementes 5. Das Abschlußelement 5 des Füllrohres 1 wurde hier ventilkegelartig 18 ausgebildet, um die Umlenkung des ausströmenden Füllgutes 3 in die radiale Richtung strömungsförmig zu verbessern. Bei dieser Ausführung entfallen die Verbindungsstege 8, so daß das Füllgut 3 am ganzen Rohrumfang 19 austreten kann. Das ventilkegelartige Abschlußelement 18 wurde beispielsweise über drei Verbindungsstege 20 mit dem Füllrohr 1 verbunden.

**Patentansprüche**

1. Füllrohr zum Füllen von schlauchförmigen Verpackungshüllen (2) mit pastösem Füllgut (3), mit einem vor dem Austrittsende (6) des Füllrohres (1) angebrachten deckel- oder stopfenartigen Abschlußelement (5), das mit dem Füllrohr (1) so verbunden ist, daß sich zwischen dem Austrittsende (6) des Füllrohres (1) und dem Abschlußelement (5) radiale Austrittsöffnungen (7) ergeben, durch die das Füllgut radial in die Verpackungshülle gelenkt wird, dadurch gekennzeichnet, daß auf dem Füllrohr (1) ein Mantelrohr (12) axial verschiebbar angebracht ist, das in seiner ersten Endstellung die Austrittsöffnungen (7) des Füllrohres (1) freigibt und in seiner zweiten Endstellung mantelförmig verschließt, und daß die Stirnkante des Mantelrohres (12) als Schneide (13) ausgebildet ist.

2. Füllrohr nach Anspruch 1, dadurch gekennzeichnet, daß das Mantelrohr (12) in einer kombinierten Axial-Drehbewegung in seine zweite Endstellung bringbar ist.

3. Füllrohr nach einem der Ansprüche 1 oder 2, dadurch gekennzeichnet, daß das Abschlußelement (5) ventilkegelförmig ausgebildet ist.

**Claims**

1. A filling tube for filling tubular casings (2) with pasty material (3), comprising a cover- or pluglike closure member (5), which is mounted in front of the discharge end (6) of the filling tube (1) and is connected to the filling tube (1) in such a manner that radial discharge openings (7) are left between the discharge end (6) of the filling tube (1) and the closing member (5), and the material to be filled is radially directed through said radial discharge openings into the casing, characterized in that a shell tube (12) is axially slidably mounted on the filling tube (1) and in its first end position exposes the discharge openings (7) of the filling tube (1) and in its second end position closes said discharge openings as with a shell, and that the end edge of the shell tube (12) constitutes a knife edge (13).

2. A filling tube according to claim 1, characterized in that the shell tube (12) is movable to its second end position by a combined axial and rotational movement.

3. A filling tube according to claim 1 or 2, characterized in that the closure member (5) constitutes a valve poppet.

**Revendications**

1. Tube de remplissage pour remplir des enveloppes d'emballage (2) en forme de tube souple de produit pâteux (3), comprenant un élément de fermeture (5), de type en couvercle ou en bouchon, placé devant l'extrémité de sortie (6) du tube de remplissage (1) et relié au tube de remplissage (1) de manière à former entre l'extrémité de sortie (6) du tube de remplissage (1) et l'élément de fermeture (5) des ouvertures radiales de sortie (7), par lesquelles le produit est dévié radialement dans l'enveloppe d'emballage, caractérisé en ce que sur le tube de remplissage (1) est monté, avec possibilité de coulisser axialement, un tube formant chemise (12) qui, en sa première position d'extrémité, dégage les ouvertures de sortie (7) du tube de remplissage (1) et, en sa seconde position d'extrémitée, les ferme à la manière d'une chemise, et en ce que l'arête frontale du tube formant chemise (12) est agencée en couteau (13).

2. Tube de remplissage suivant la revendication 1, caractérisé en ce que le tube formant chemise (12) peut être amené en sa seconde position d'extrémité par un mouvement combiné de rotation et de déplacement suivant l'axe.

3. Tube de remplissage suivant l'une des revendications 1 ou 2, caractérisé en ce que l'élément de fermeture (5) est agencé en forme de cône de soupape.

# Fig.1

# Fig. 2

# Fig. 3

# Fig.4a

# Fig.4b

# Fig.5a

# Fig.5b